# EUROPEAN PATENT APPLICATION

(11) **EP 2 273 438 A1**
(43) Date of publication of application: **12.01.2011**
(21) Application number: 10165177.6
(22) Date of filing: 08.06.2010
(51) Int. Cl.: G06Q 20/00, G06F 21/00, G06Q 30/00

(54) **Use of a hardware fingerprint with an on-line or networked payment authorization system**

(30) Priority: 24.06.2009 US 220112 P
(71) Applicant: Uniloc USA, Inc., Irvine, CA 92612 (US)
(72) Inventor: Etchegoyen, Craig Stephen, Irvine, CA 92612 (US)
(74) Representative: Casbon, Paul Richard

(57) **Abstract**

A method for selectively authorizing a transaction at one or more servers comprises steps for receiving a request to authorize the transaction, receiving machine fingerprint data related to the request to authorize the transaction, saving the machine fingerprint data in a memory, receiving associated payment information related to the request to authorize the transaction, saving the payment information in a memory, retrieving previously stored machine fingerprint data associated with the payment information, comparing the received machine fingerprint data with previously stored machine fingerprint data associated with the payment information, and determining, using the machine fingerprint data, whether to authorize the transaction.

## Description

This application claims priority to U.S. Provisional Application No. 61/220,112 which was filed June 24, 2009 and which is fully incorporated herein by reference.

### BACKGROUND

### Field

The present disclosure relates to methods and systems for selectively allowing or authorizing payment via an on-line or network transaction system, such as a payment authorization system, and for maintaining and updating a list of known devices that are associated with known user account or payment information.

### Description of Related Art

Various on-line or networked transaction systems exist for providing secure online transactions. Some transaction systems can run on a single server. Such single-server transaction systems typically handle smaller demands, including smaller amounts of traffic. To handle larger demands, some systems may run on several servers to distribute database input/output (I/O) and web transactions. Some transaction services offer some form of security by requiring usernames and passwords for access. Many transaction services require credit card information, which may be used as part of its access security. Despite the existence of on-line or networked transaction services, there remain opportunities to improve such services, including but not limited to improving security by incorporating hardware identification, sometimes called "hardware fingerprinting," and by maintaining a database of hardware fingerprint information and corresponding payment or account information. It is desirable to provide these and other capabilities in a more secure system for on-line or networked transaction services.

### SUMMARY

The present technology uses a hardware fingerprint in an on-line or networked transaction system, e.g., a payment authorization system, to increase the security of the system. The system utilizes at least one server in communication with one or more clients via a communications network. For simplicity and illustrative purposes, the following summary will describe a system with only one server, but one of ordinary skill in the art should immediately understand that transaction systems using more than one server also are contemplated.

The server responds to data transmitted from a client seeking to participate in a transaction, and processes the data to determine whether to authorize or allow participation in the transaction. The data from the client includes a hardware fingerprint determined at the client machine. The data from the client may also include credit card information, account information, and/or other payment information. The hardware fingerprint, credit card and/or other payment information may be registered at the server prior to the transaction process.

The hardware fingerprint, with or without the other payment information, may be used to identify to a transaction system a particular client device, such as, for example, a networked device that has been pre-verified or successfully completed a prior transaction process. Such information may be maintained in database records related to the hardware fingerprint and/or other payment information that are accessible to the server(s). The database records may be updated to include, e.g., hardware fingerprints, identifying payment information, including, e.g., account information and/or credit card information, and/or other payment information, and corresponding client names for new users, or new or additional hardware fingerprints and/or identifying account or credit card and/or other payment information for prior users. The database records also may be updated to include information indicating whether or not particular hardware fingerprints or identifying credit card or other identifying information or client names are associated with a networked transaction or payment authorization process that has been successfully completed.

The payment information, including account or credit card information, transmitted from a client seeking to participate in a transaction process, including any hardware fingerprint determined at the client machine, may be encrypted using any suitable encryption technique. Examples of possible encryption techniques include, but are not limited to, a public key algorithm. Optionally, encryption may encompass use of a public key and a private key, e.g., Secure Sockets Layer (sometimes abbreviated SSL). Alternatively, payment information, including accounting and/or credit card information may be encrypted using a symmetric private key, which may comprise, for example, the hardware fingerprint of the client machine.

A server that has received data transmitted from a client seeking to participate in a transaction process, including a transaction authorization process, will decrypt as necessary the data transmitted from a client using an appropriate decryption technique.

Prior to allowing a particular client to participate in a transaction process, a server that has received data transmitted from a client seeking to participate in a transaction process processes received data to determine whether to authorize or allow participation in the process. The server may compare the hardware fingerprint received from the client with hardware fingerprints already stored in a database or other repository. This repository may simply be a database of hardware fingerprints and associated customer names compiled from prior verification or transaction processes. The repository may also include associated payment information, including account information and/or credit card information.

If the hardware fingerprint received from the client is already stored in a database, the server may prompt the client for confirmation of payment information, including credit card or account information or the client name(s) associated with the hardware fingerprint that was received from the client and is already stored in a database.

If the hardware fingerprint received from the client is not already stored in a database, the server may update the database with the new hardware fingerprint data. The server also may prompt the client for additional information, including payment information, such as account information and/or credit card information, and/or the client name(s) associated with the new hardware fingerprint received, and may update the database with the additional information, including the payment information and/or the client name(s) associated with the new hardware fingerprint received. Optionally, this could be accomplished during a separate prior verification process.

Prior to allowing a client to complete a transaction process, such as a payment authorization process, the server checks the client's associated hardware fingerprint received from the client and checks other information, including identifying payment or the client name(s), to determine whether any of such information provides an indication that the transaction process should not be authorized. If such check provides an indication the transaction process should not be authorized, the transaction requested by the client may not be permitted or completed. Optionally, the check may include a check of other related information including historical information,

The subject technology may further include a novel method and system for determining a hardware fingerprint, which may be used to determine a hardware fingerprint determined for the client in the method and system summarized above. The fingerprinting method is not limited to this application, however, and may be applied to any circumstance in which it is desired to exchange a hardware fingerprint between two machines. The resulting fingerprint has a sufficiently high probability of being unique to the machine from which it is generated. The fingerprint is generated by applying a data template or mask supplied from a server in a fingerprinting operation performed on the client. Without this data template or mask, the fingerprint of the client device is not obtained.

To generate the fingerprint, the client device first reads local system component parameter information according to a predefined algorithm to generate a data file. The parameters checked to generate the fingerprint may include, for example, hard disk volume name, computer name, hard disk initialization date, amount of installed memory, type of processor, software or operating system serial number, or unique parameters associated with firmware installed in the client device. In general, the collected parameter information should be of a time-stable or static nature for the client. The resulting data file, also referred to herein as "gross fingerprint data," may be stored in a file in a memory of the client. It may be advantageous to store the file in a transient file only, such as in a random-access memory (RAM) device, so that no record of the file remains after the fingerprint is generated. The stored data file comprises parameter data arranged in a defined order of data fields or records. Each data field may be of a known length, which may vary for each field. The gross fingerprint data file may be encrypted, secured or obfuscated using any suitable method.

In some embodiments, the client may transmit the entire gross fingerprint data file to a trusted server when it is first generated. In other embodiments, the gross fingerprint data is never provided in its entirety to another device.

The client may then request information from a trusted source for defining a sampling protocol, i.e., the data template or mask, for deriving a working fingerprint from the gross fingerprint data. The sample-defining template may comprise information defining a filter or other transformation to be applied to the original fingerprint data file to generate a device fingerprint. In some embodiments, the template defines a map for selecting designated portions of the fingerprint data file. For example, the template may specify one or more bytes of data, but less than all data, be selected from each data field in a particular order or position. The client processes the gross fingerprint data using the sample-defining template to generate a resulting working machine fingerprint, which may be stored in a local buffering system. The client, the source of the sample-defining template, or both may store the sample-defining information in a secure file for future reference, optionally first encrypting it.

The client may then provide the working machine fingerprint to any other device that needs the fingerprint to identify or authenticate the client device. In some embodiments, a trusted server maintains a record of the entire gross fingerprint data for the client, while the sample-defining template used to generate a working machine fingerprint is discarded after each use. The server may generate the sample-defining template and confirm that the machine fingerprint generated by the client is consistent with both the gross fingerprint data and with the sample-defining template. By specifying different sample-defining template at different times, the server may thereby authenticate the client without requiring the client to transmit the entirety of the gross fingerprint data for each authentication instance. Instead, the gross fingerprint data may provided from the client to the server during a single initialization session, which may be initiated and secured by the server using appropriate security tools, if it is transmitted at all. Subsequent sessions need not be as secure because the entirety of the gross fingerprint data is not retransmitted. The utility of the client's machine fingerprint for authentication of device identity is thereby maintained in a more secure form.

A more complete understanding of the networked or online transaction authorization system will be afforded to those skilled in the art, as well as a realization of additional advantages and objects thereof, by a consideration of the following detailed description. Reference will be made to the appended sheets of drawings which will first be described briefly.

### BRIEF DESCRIPTION OF THE DRAWINGS

FIG. 1 is a schematic diagram showing illustrative elements of a system for performing a networked or on-line transaction process.

FIG. 2 is a sequence diagram showing illustrative process elements for networked transaction processes across different system components.

FIG. 3 is a flow chart showing illustrative networked or on-line transaction processing steps performed by a server.

FIG. 4 is a flow chart showing illustrative networked or on-line transaction processing steps performed by a client.

FIG. 5 is a system diagram showing illustrative elements of a client and its components for generating a fingerprint.

FIG. 6 is a diagram showing illustrative data elements used in generating a fingerprint.

FIG. 7 is a flow chart showing an illustrative process for generating a fingerprint performed by a client.

FIG. 8 is a flow chart showing an illustrative process for generating a modular hardware fingerprint performed by a server in cooperation with a client device.

Throughout the several figures and in the specification that follows, like element numerals are used to indicate like elements appearing in one or more of the figures.

### DETAILED DESCRIPTION

The present technology offers secure on-line transaction services by using machine fingerprint information to perform gate keeping functions. In addition, there are disclosed herein systems and methods for identifying a client computing device for use with the on-line transaction services, and in other applications.

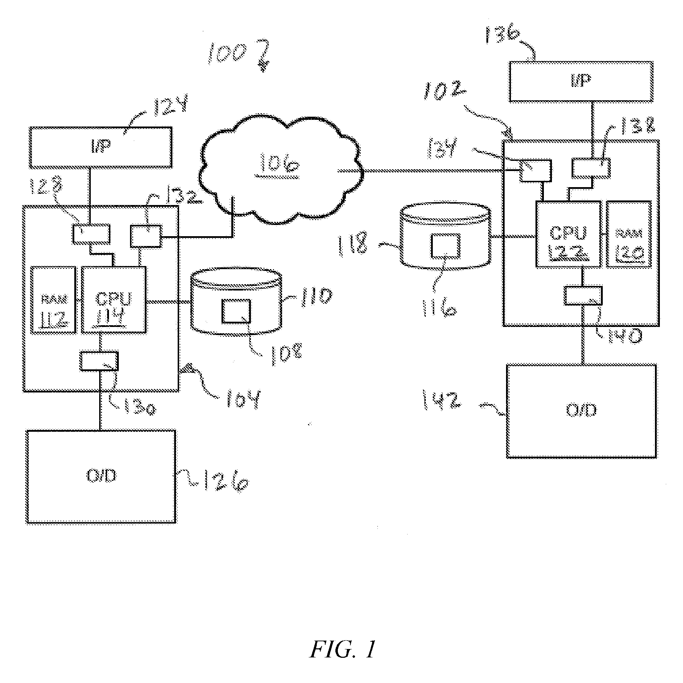

FIG. 1 shows a system 100 including a server 102 and a client device 104 in communication via a communications network 106. Communications network 106 may comprise the Internet, a cellular communications network, a satellite communications network, a local area network, or some combination of these or other suitable networks. The client device may be configured with a software executable file or files 108 encoded in a computer-readable media of a data storage device 110. When executed by the client processor 114, the executable file or files causes the client device to perform the client-side processes and outputs as described in more detail herein. Examples of suitable devices for use as client device 104 include personal computers, programmable communications devices such as mobile telephones and media players, "netbooks," and other programmable devices.

Likewise, the server 102 may be configured with a server-side application file or files 116 encoded in a computer-readable media of a data storage device 118. When executed by the server processor 122, the executable file or files causes the client device to perform the server-side processes and outputs as described in more detail herein. File or files 108 and 116 may be developed by writing programming code in any suitable programming language to perform the actions and provide the outputs consistent with the disclosure herein, and compiling the code to provide machine-executable code. Like the client device 104, the server 102 may comprise any one of various suitable programmable computing devices. In the alternative, server 102 may comprise a coordinated assembly of such computing devices, for example, a server farm or cluster, or a distributed network of servers.

Generally, both the server 102 and the client 104 may be configured as input-transforming machines, the very purpose of which is to receive physical input from at least one client-side user input device 124 and provide a responsive physical output via a client-side output device 126, such as an audio-video output. Input device 124 may comprise various devices, for example, a keyboard, mouse, microphone, or other physical transducer connected to client 104 and configured to transform physical input from a user into a data signal, which may be routed through an interface device 128 and provided as input to processor 114. The processor 114, operating an executable as described herein, responds to the input signal and provides output data through a video interface 130 to an output device 126. The processor 114 may further receive input data from the server 102 or provide output to the server via network interface 132 and communications network 106.

Conversely, server 102 may receive input data from the client 104 or provide output to the client via network interface 134 and communications network 106. Optionally, server 102 may comprise an input device 136 in communication with the processor 120 via an interface 138, and provide output via an interface 140 to an output device 142, such as an audio or video output device.

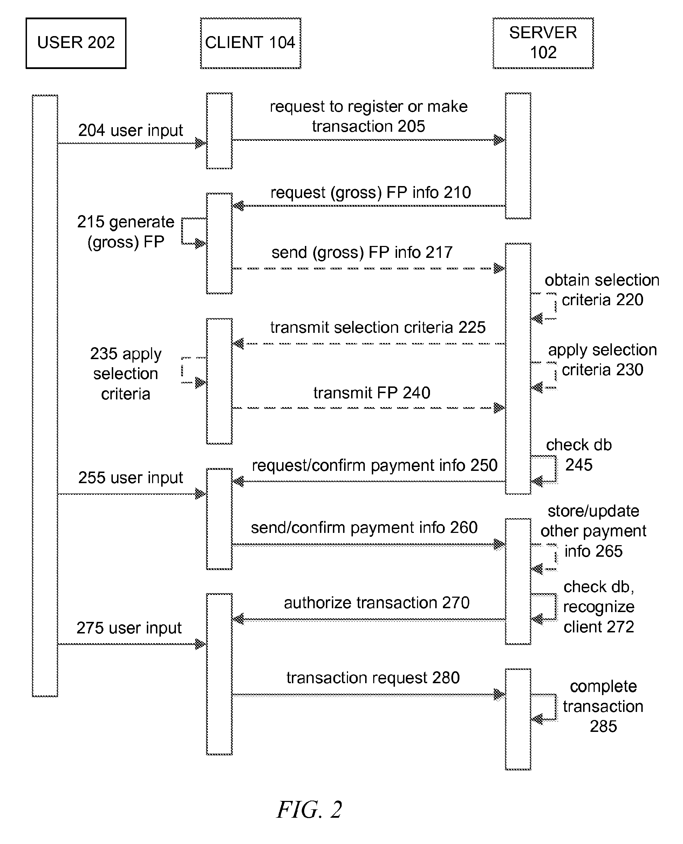

FIG. 2 is illustrative of some responsive and independent actions of a client 104 operating in cooperation with a server 102 to receive input from a user 202 and provide responsive output to the user. By way of background, a software executable installed, or to be installed, on client 104 is capable of performing functions desired by the user. The software executable may be installed by copying to the client from, e.g., a portable computer-readable media read by a client component, or a peripheral device in communication with the client, or a remote source via a communications network.

Client 104 may receive user input (204) and thereby generate a request (205) to the server 102. The user input and request may communicate a user's interest in participating in a transaction, e.g., making an authorized payment using a credit card, or an authorized debit from an account, or providing verification information to permit transaction authorization. In response to the request, the server 102 may initiate a request (210) for identifying data or machine fingerprint data at the client device. The fingerprinting function(s) may be performed by one or more separate applications, for example, one or more distributable applications pushed to the client 104 by server 102 in connection with the request for identifying information, or at some earlier time.

Methods for generating a gross machine fingerprint are described later in the specification. "Gross" is used with "fingerprint" herein to signify a set of identification data from which a smaller set of data may be extracted to provide a selected set of fingerprint data. "Fingerprint data" is described in more detail below, and signifies data that is characteristic of hardware or firmware belonging to the client device, collected and assembled to have a sufficiently high probability, depending upon the use and environment, of being unique to the client.

The request from the server 210 optionally may include specific selection criteria to extract only a subset of the fingerprint data. In response to the request for the server 102, the client 104 may generate fingerprint data or gross finger print data (215). The client may maintain the gross fingerprint data in a temporary memory or client buffer, as a temporary file having a defined data structure. In the alternative, or in addition, the client may store the gross fingerprint data in a memory storage device or transmit it to the server (217). Either of these alternatives, however, may increase the risk of the gross fingerprint data being taken and used to circumvent the protective measures disclosed herein. Conversely, such risks may be reduced by encrypting, obfuscated or otherwise securing the gross fingerprint data using any suitable method.

Optionally, if not part of the original request for fingerprint data, the server 102 may generate or obtain from memory suitable selection criteria (220). These selection criteria may also be referred to as a "mask" or "template". The server may retrieve a stored selection mask having parameters defined for gross fingerprint data having a predetermined data structure. In the alternative, or in addition, the server may generate a selection mask in response to receiving data describing the data structure of the gross fingerprint. A key characteristic of the selection mask is a designation of less than 100% of the data contained in the gross fingerprint file, for example, 5%, 10%, or some other percentage within the range of about 0.1% to 99%, and more typically about 5% to 50%. The selection mask also defines locations within the gross fingerprint file from which the designation portion of selected data is to be selected. For example, the selection mask may specify selecting the first and third data bytes from a first field of the data structure, the third and fourth bytes from the second field, and so forth. Further details and examples of selection masks are described later in the specification.

Optionally, the server 102 may apply the selection criteria to the gross fingerprint data if maintained at the server (230), or supply the selection criteria to the client 104 if not previously done (225), in which case the selection criteria or mask is applied (235) at the client 104.

The mask is applied to the gross fingerprint data to generate a selected machine fingerprint. The machine fingerprint may be determined by an irreversible function of the gross fingerprint data and the selection mask, such that the selection mask and machine fingerprint cannot be used to determine the gross machine fingerprint. The irreversible function comprises selecting data from the gross fingerprint data as specified by the selection criteria to create a second fingerprint file from which a substantial portion of the gross fingerprint data is omitted. The irreversible function may further comprise encrypting the second file using an irreversible cryptographic hash.

If the mask is applied by the client 104, the fingerprint is transmitted (240) to the server 102. Optionally, the client 104 may encrypt the one or more files before transmitting to the server 102. After transmitting the machine fingerprint, the client 102 may delete the gross fingerprint data and/or the machine fingerprint from any local memory. In the alternative, the client 104 may store the gross fingerprint data and/or the machine fingerprint in a local nonvolatile memory or storage device accessible to the client. Optionally, the client 104 may encrypt the gross fingerprint data and/or the machine fingerprint before storing such information locally.

If the masking is performed by the client, the server 102 receives the machine fingerprint and decrypts it if necessary. The masked fingerprint data may be stored in a local or remote memory accessible to the server.

After obtaining the masked fingerprint data, the server 102 may compare the data with one or more local or remote databases of previously received or registered fingerprint data (245).

If the fingerprint data of the client 104 is found in a database, the server may determine whether additional user data such as user name, address, phone number, and payment information such as credit card information or account information is already on file.

If such additional user data is found, the server may request confirmation of such additional payment information and user data (250). Optionally, the server may permit updating of such data by the user 202 if necessary.

If the fingerprint data of the client 104 is not found in a database, or if payment information or other user data is not on file, the server may request such payment information or additional user data (250), e.g., user name, address, phone number, and payment information such as credit card information or account information. Alternatively, such request may comprise part of a pre-verification or pre-certification process. Alternatively, such request may comprise part of an updating process. Optionally, such a pre-verification or pre-certification process may be a separate process.

Depending on the request (250) from the server 102, the user 202 provides confirmation or inputs the necessary payment information and/or additional user data (255) to the client 104, which receives the confirmation or payment information and/or additional user data and transmits the confirmation or information and data (260) to the server 102. Optionally and preferably, payment information and/or additional user data may be encrypted by the client 104 before transmission to the server 102 using any suitable encryption technique. As discussed above, examples of possible encryption techniques include, but are not limited to, a public key algorithm. Optionally, encryption may encompass use of a public key and a private key, e.g., Secure Sockets Layer (sometimes abbreviated SSL). Alternatively, payment information, including accounting and/or credit card information may be encrypted using a symmetric private key, which may comprise, for example, the hardware fingerprint of the client machine.

If part of a pre-verification or pre-certification or update process, the server 102 stores or updates locally or remotely (265) user name, address, phone number, and payment information such as credit card information or account information. Such storage or updating may include encrypting the information using any suitable encryption technique. Optionally, a pre-verification or pre-certification or update process may be a separate process, in which case the pre-verification or pre-certification or update process may be considered completed at this point, and the pre-verification or pre-certification or update process terminated. Optionally, a pre-verification or pre-certification or update process may require the user to the user 202 to reinitiate or make a separate request to make a transaction (204, 205).

After the server 102 has obtained the masked fingerprint information (230, 240) and payment information (260), the server 102 checks the local and/or remote databases (272) to determine whether the masked fingerprint information and payment information obtained sufficiently matches previously stored masked fingerprint information and associated payment information. The check may include any suitable verification steps. For example, if a credit card or account number is submitted by a user 202, the server may check the local or remote database to determine whether such payment information has been previously submitted by the user. If relevant payment information received is found in the local or remote database(s), the server may determine whether the fingerprint associated with relevant payment information stored in the database registry sufficiently matches the masked fingerprint obtained.

If the server determines that the information obtained from the user 202 and client 104 sufficiently matches previously obtained information, the transaction may be authorized. As a result, the system may prevent payment information, e.g., credit card information or account information from being used on an unrecognized client 104, such as an unrecognized computer, PDA, phone or other networked device.

Optionally, the server 102 may check the local and/or remote databases to determine if there is any historical information indicating that the user 202 or client 104 previously did not successfully complete a transaction. If the optional check determines that the client 104 previously did not successfully complete a transaction, the server may initiate appropriate and suitable measures, including terminating the session until appropriate corrective action is taken by the user 202. This check may be performed when fingerprint data is first received, or at any time thereafter, and may or may not include the additional user data.

After authorization has been received (270), the user 202 may specify a particular transaction to be executed via user input (275) to, e.g., make a payment to a particular vendor or service provider using a particular credit card or account number. The specified transaction also could encompass returning to complete a previously uncompleted transaction, or to ameliorate a failed transaction. The user input (275) is transmitted to the server as part of a specific transaction request (280). Optionally, the specific transaction request may be encrypted using any suitable encryption technique prior to transmission.

The server 102 then executes or completes the specific transaction requested (285). Optionally, completion could include providing a confirmation of or receipt for the completed transaction. Optionally, such confirmation or receipt could be electronically stored, displayed, or printed.

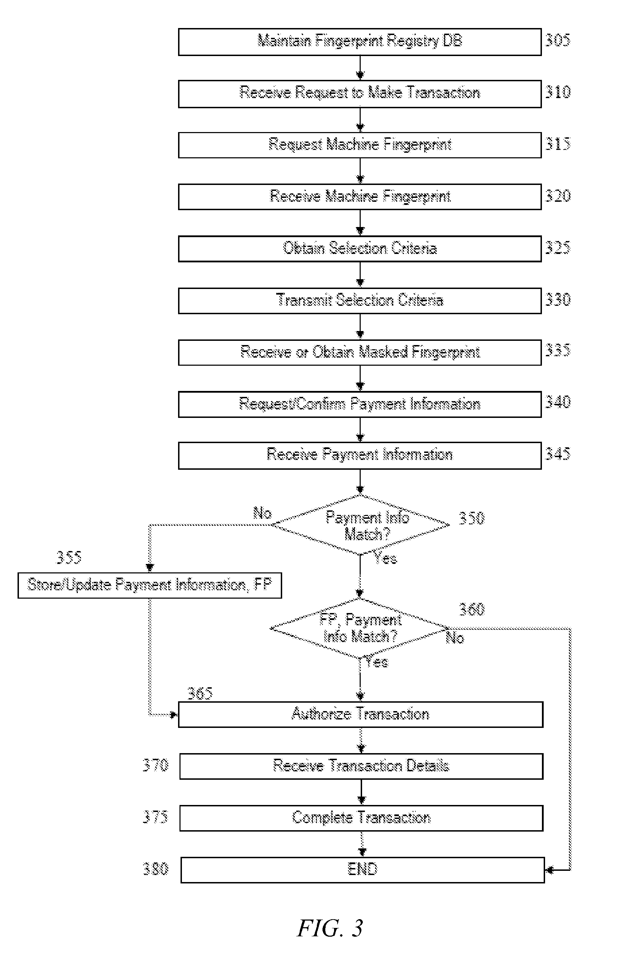

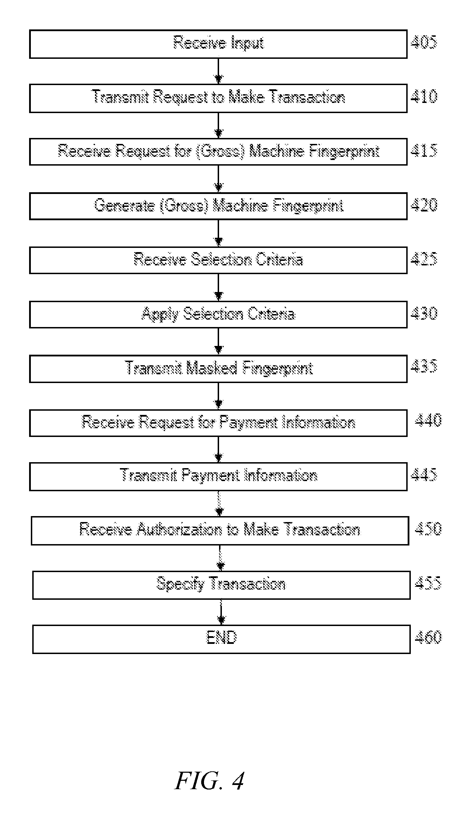

FIG. 2 diagrams the interaction between a server (or multiple servers), client, and user. FIG. 3 shows how a server (or multiple servers) performs methods consistent with the descriptions herein, including interactions illustrated in FIG. 2 and corresponding text. FIG. 4 shows how a client performs methods consistent with descriptions herein, including the interactions illustrated in FIG. 2 and corresponding text.

Referring to FIG. 3, a method 300 is shown for implementation on one or more servers. The server(s) may maintain a machine fingerprint registry 305, databases or a database accessible to the server and responsive to input and queries from the server.

The fingerprint registry 305 may hold machine fingerprint records in association with particular users, including, e.g., payment information such as credit card information or account information, and other user data such as, e.g., user name, address, phone number. The fingerprint registry illustrates a useful data structure for use with the disclosed method. Other means for registering or tracking the information discussed above may also be useful. The fingerprint registry 305 allows the system to prevent credit card and/or account information from being used on unrecognized clients.

With these registries or equivalent functional capacity in place, the server may receive a request to make a transaction 310. The processor and network interface, programmed using one or more suitable applications to communicate data over the network and recognize such a request, may comprise a means for receiving such a request.

In response to the request, the server may request machine fingerprint data (315) from the client device. Alternatively, the server may request that the fingerprint data merely be gathered by the client but not sent to the server. The request for fingerprint data may include pushing one or more distributable applications to the client in connection with the request for identifying information, if such has not been done at an earlier time. The processor and network interface, programmed using one or more suitable applications to communicate data over the network and transmit such a request, may comprise a means for transmitting such a request.

Following a request for machine fingerprint data 315, the server may then receive gross fingerprint data 320 transmitted by the client. Alternatively, the server may not receive fingerprint data until the client has applied the mask to the fingerprint data.

The server may obtain selection criteria 325. The server may do so from a local or remote memory location, or from a formulaic determination, in which the processor is programmed with a suitable algorithm to select particular portions of the gross fingerprint. The request 315 may include selection criteria or mask.

The server may then transmit the selection criteria or mask to the client 330. This will permit the client to generate the masked fingerprint data. Alternatively, the server may transmit the mask together with the request 315. Alternatively, the server may not transmit the mask at all, if the mask is to be applied at the server.

At step 335, the server receives the masked fingerprint sent by the client. Alternatively, the server may obtain the (masked) fingerprint data by applying the mask to gross machine fingerprint data that may have been received in step 320.

At step 340, the server may request or seek confirmation of payment information, e.g., credit card information or account information, and other user data such as, e.g., user name, address, phone number.

At step 345, the server may receive payment information, e.g., credit card information or account information, and other user data such as, e.g., user name, address, phone number.

At step 350, the server may check the local or remote database with previously stored payment information, e.g., to determine whether the payment information has been previously submitted. For example, if a credit card or account number is submitted by a user 202, the server may check the local or remote database to determine whether such payment information has been previously submitted by the user.

The comparison of the payment information may be accomplished using any suitable method, one of which is to compare the received or obtained payment information, or a portion thereof, with corresponding information from the registry. In the alternative, an algorithm programmed in software running on the server may test the payment information or a portion thereof A processor programmed to query a database and compare query results or otherwise process payment information or a portion thereof may comprise a means for comparing or verifying payment information.

If relevant payment information received (at 345) is not found in the local or remote databases (at 350), such result may indicate a first use of such payment information. If such is the case, the new relevant payment information may be stored in the local or remote database(s), or the database(s) may be otherwise suitably updated (step 355) so that the new payment information and associated machine fingerprint data is available in the machine fingerprint registry database(s). After the new payment information and associated machine fingerprint data has been suitably stored or updated in the machine fingerprint registry database(s), the server may authorize the requested transaction (step 365).

Optionally, if relevant payment information received (at 345) is not found in the local or remote databases (at 350), the server may issue any suitable error or failure message in any suitable manner, and optionally may terminate the connection.

If relevant payment information received (at 345) is found in the local or remote database(s) (at 350), at step 360, the server may determine whether the fingerprint associated with relevant payment information stored in the database registry sufficiently matches the masked fingerprint obtained (at 335).

The comparison of the masked fingerprint data may be accomplished using any suitable method, one of which is to compare the received or obtained masked fingerprint data with the fingerprint data from the registry. In the alternative, an algorithm programmed in software running on the server may test whether the fingerprint complies with required data characteristics of a fingerprint, without reference to a database. A processor programmed to query a database and compare query results or otherwise process machine fingerprint data to check validity may comprise a means for verifying validity of the machine fingerprint.

Optionally, as part of step 360, the server may check the local and/or remote databases to determine if there is any historical information indicating that the user 202 did not successfully a prior transaction. If the optional check determines that the user did not successfully complete a prior transaction, the server may initiate appropriate and suitable measures, including terminating the session until appropriate corrective action is taken by the user. This check may be performed when fingerprint data is first received, or at any time thereafter, and may or may not include the additional payment information or user data.

Optionally, at step 360, if the server cannot validate the fingerprint data received or obtained, the server may generate and transmit a request for other secure identification information, including, e.g., a secure password previously provided by the user. Alternatively, if the server can validate the fingerprint data received or obtained, the server may seek to confirm that other identification information in the database associated with the fingerprint information is correct, including, e.g., user name, address, phone number, and/ or other payment information.

If the server determines (at 360) that the fingerprint associated with relevant payment information stored in the database registry does not sufficiently match the masked fingerprint obtained and optionally otherwise cannot validate the fingerprint obtained, the transaction may not be authorized, and the server optionally may issue any suitable error or failure message in any suitable manner, and optionally may terminate the connection with the client.

Optionally, if the server determines (at 360) that the fingerprint associated with relevant payment information stored in the database registry does not sufficiently match the masked fingerprint obtained and optionally otherwise cannot validate the fingerprint obtained, the fingerprint information (and optionally other associated information) may be stored in a local or remote database containing historical information regarding fingerprints, or nominal clients or users that previously attempted but did not successfully complete a transaction, and which may represent or reflect machine finger prints associated with a level of risk that may not be tolerable in some, most or all transaction processes.

At step 365, the server transmits an authorization or authorizes the requested transaction. The authorization optionally may include providing a password or other security information that is to be used by a client in a specific transaction.

At step 375, the server receives a request for the specific transaction to be executed, which may encompass any suitable on-line or networked functions or services provided by the server. Optionally, the server may decrypt the specific transaction request using any suitable decryption technique.

At 375, the server executes and completes the requested transaction. Optionally, completion may include providing a confirmation of or receipt for the completed transaction. Such confirmation or receipt could be in any suitable form for transmission and/or electronic storage, display, and/or printing.

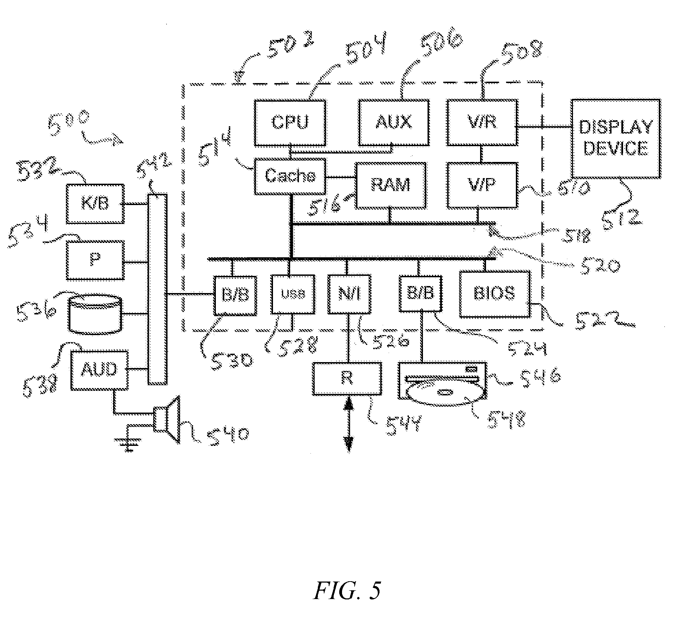

So far as the server is concerned, the machine fingerprint may comprise any data that uniquely identifies the client machine as a physical unit, and not merely as holding some identification data previously supplied by the server to the client. In other words, the machine fingerprint should not be confused with a cookie identifier, which comprises data originating from a server and stored on the client. In some embodiments, the machine fingerprint is developed by interaction between the server and the client, as described more fully in connection with FIGS. 5-8 below. In other embodiments, the fingerprint may be independently generated at the client by operation of the software executable to which the license key is assigned. The processor and network interface, programmed using one or more applications to communicate data over the network and recognize a machine fingerprint, may comprise a means for receiving the fingerprint data.

FIG. 4 shows a method 400 for implementation on a client, for use in cooperation with server-based method 300.

At 405, the client receives input seeking to make a transaction. The input could be generated by a user with an input device, or could be an automated input from an executable application resident on the client or remotely.

At 410, the received request to make a transaction is transmitted. A network interface, optionally together with a processor, programmed using one or more suitable applications to communicate data over the network and transmit such a request, may comprise a means for transmitting such a request.

At 415, the client receives a request for gross machine fingerprint information. Optionally, the request received could also be coupled with selection criteria (e.g., a mask), which case the received request could be for masked fingerprint data. A network interface, optionally together with a processor, programmed using one or more suitable applications to communicate data over the network and recognize such a request, may comprise a means for receiving such a request.

At 420, the client generates the requested fingerprint information. At least one application running on the client computing device or otherwise accessing the computing device's hardware and file system may generate a machine fingerprint. The application may prepare a gross fingerprint and select from a portion of that machine fingerprint for providing to the server. In the alternative, the client may prepare a gross fingerprint for use in its entirety as a machine fingerprint for providing to the server. In either case, the application may generate the gross fingerprint data using a process that operates on data indicative of the client's configuration and hardware. The gross fingerprint data may be generated using user-configurable machine parameters, non-user-configurable machine parameters, or both, as input to a process that generates a gross fingerprint data file as binary data.

Each machine parameter indicates a state or identifier for a hardware component, software component, or data component of the client. To obtain stable gross fingerprint data, relatively stable or static machine parameters should be selected. The machine parameters may be selected such that the resulting gross fingerprint data has a very high probability (e.g., greater than 99.999%) of being unique to the client. In addition, the machine parameters may be selected such that the gross fingerprint data includes at least a stable unique portion up to and including the entire identifier that has a very high probability of remaining unchanged during normal operation of the client. The resulting gross fingerprint data should be highly specific, unique, reproducible and stable as a result of properly selecting the machine parameters.

An example of a client device 500 comprising multiple components that may provide input for a gross fingerprint is shown in FIG. 5. Client 500 is depicted by way of example only, and does not limit the configuration of a client device on which hardware fingerprinting may usefully be performed. Client 500 may comprise a motherboard 502 on which reside a CPU 504 and one or more auxiliary processors 506. The CPU may comprise a cache memory 514 in communication with a random access memory (RAM) 516. A video processor 510 may communicate with these components via a bus or hub 518, including, e.g., a Northbridge hub, and provide video data through video RAM 508 to a display device 512.

Other components may communicate with the CPU 504 via a bus or hub 520, including, e.g., a Southbridge hub, such as, for example a BIOS read-only memory or flash memory device 522, one or more additional bus bridges 524, 530, a network interface device 526, and a serial port 528. Each of these and other components may be characterized by some data or parameter settings that may be collected using the CPU 504 and used to characterize the client device 500. In addition, the client may be connected to various peripheral devices. For example, client 500 may be connected to a keyboard 532, a pointing device 534, a data storage device 536, and an audio output device 538 for transforming a data signal into audio output for a speaker 540 or amplifier (not shown). Other peripheral devices may include a router 544 connected via network interface 526 and providing connectivity to the Internet or other network, which may comprise a means for receiving applications or data from a server, or communicating with a server. Some clients may also include a media reader 546 for portable media 548, which may comprise a means for receiving an application capable of performing methods and processes disclosed herein.

Although client device 500 is shown with components as may often be found in personal computers, the technology disclosed herein may also be implemented on more highly integrated portable clients having programmable processors, memories and means for communicating with a server. Such clients also have components with non-user-configurable settings that may be used in compiling a device fingerprint. Examples of integrated portable clients include application-capable mobile phones, media players, personal organizers, and netbooks.

Returning to FIG. 4, to generate the fingerprint 420, the application may operate by performing a system scan to determine a present configuration of the computing device. The application may then select the machine parameters to be used as input for generating the unique gross fingerprint data. Selection of parameters may vary depending on the system configuration. Once the parameters are selected, the application may generate the identifier.

Illustrative examples of various machine parameters that may be accessible to an application or applications running on or interacting with a processor of the client machine include: machine model; machine serial number; machine copyright; machine ROM version; machine bus speed; machine details; machine manufacturer; machine ROM release date; machine ROM size; machine UUID; and machine service tag. For further example, these machine parameters may include: CPU ID; CPU model; CPU details; CPU actual speed; CPU family; CPU manufacturer; CPU voltage; and CPU external clock; memory model; memory slots; memory total; and memory details; video card or component model; video card or component details; display model; display details; audio model; and audio details; network model; network address; Bluetooth address; BlackBox model; BlackBox serial; BlackBox details; BlackBox damage map; BlackBox volume name; NetStore details; and NetStore volume name; optical drive model; optical drive serial; optical details; keyboard model; keyboard details; mouse model; mouse details; printer details; and scanner details; baseboard manufacturer; baseboard product name; baseboard version; baseboard serial number; and baseboard asset tag; chassis manufacturer; chassis type; chassis version; and chassis serial number; IDE controller; SATA controller; RAID controller; and SCSI controller; port connector designator; port connector type; port connector port type; and system slot type; cache level; cache size; cache max size; cache SRAM type; and cache error correction type; fan; PCMCIA; modem; portable battery; tape drive; USB controller; and USB hub; device model; device model IMEI; device model IMSI; and device model LCD; wireless 802.11 device; webcam; game controller; silicone serial; and PCI controller; machine model, processor model, processor details, processor speed, memory model, memory total, network model of each Ethernet interface, network MAC address of each Ethernet interface, BlackBox Model, BlackBox Serial (e.g., using Dallas Silicone Serial DS-2401 chipset or the like), OS install date, nonce value, and nonce time of day. The foregoing examples are merely illustrative, and any suitable machine parameters may be used.

Because many client devices are mass-produced, using hardware parameters limited to the client box may not always provide the desired level of assurance that a gross fingerprint is unique to the client device. Use of user-configurable parameters may ameliorate this risk considerably, but at the cost of less stability. In addition, sampling of physical, non-user configurable properties for use as parameter input may also lessen the risk of generating duplicate fingerprint data. Physical device parameters available for sampling may include, for example, unique manufacturer characteristics, carbon and silicone degradation and small device failures.

Measuring carbon and silicone degradation may be accomplished, for example, by measuring a processor chip's performance in processing complex mathematical computations, or its speed in response to intensive time variable computations. These measurements depend in part on the speed with which electricity travels through the semi-conductor material from which the processor is fabricated. Using variable offsets to compensate for factors such as heat and additional stresses placed on a chip during the sampling process may allow measurements at different times to reproduce the expected values within a designated degree of precision. Over the lifetime of the processor, however, such measurements may change due to gradual degradation of the semi-conductor material. Recalibration or rewriting the gross fingerprint data may be used to compensate for such changes.

In addition to the chip benchmarking and degradation measurements, the process for generating a gross fingerprint data may include measuring physical, non-user-configurable characteristics of disk drives and solid state memory devices. For example, each data storage device may have damaged or unusable data sectors that are specific to each physical unit. A damaged or unusable sector generally remains so, and therefore a map of damaged sectors at a particular point in time may be used to identify a specific hardware device later in time. Data of this nature may also be included in a gross fingerprint file.

The application may read parameters from operating system data files or other data stored on the client, or actively obtain the parameters by querying one of more hardware components in communication with a processor on which the application is operating. A client processor provided with at least one application operating in this fashion of gather the machine parameters may comprise a means for collecting and generating gross fingerprint data.

This process of generating a working machine fingerprint 420 may include at least one irreversible transformation, such as, for example, a cryptographic hash function, such that the input machine parameters cannot be derived from the resulting gross fingerprint data. Each gross fingerprint data, to a very high degree of certainty, cannot be generated except by the suitably configured application operating or otherwise having had access to the same computing device for which the gross fingerprint data was first generated. Conversely, each gross fingerprint, again to a very high degree of certainty, can be successfully reproduced by the suitably configured application operating or otherwise having access to the same computing device on which the identifier was first generated.

Optionally, the client device may store the fingerprint in a local memory. However, in some embodiments the fingerprint is stored by the client device only temporarily to facilitate transmission to the server. This approach may lessen the risk of the fingerprint data being discovered and used for an unauthorized purpose. Alternatively, the client may transmit the gross fingerprint.

At 425, the client may receive selection criteria (e.g., a masking algorithm). At 430, the client may implement a pattern masking algorithm as described elsewhere in the specification, so that only a portion of the fingerprint data will be transmitted. This may reduce the risk that fingerprint data will be somehow intercepted during or after transmission, and used for some unauthorized purpose.

At 435, the client device may transmit the masked fingerprint as previously described. If the client does not receive any further request for information or authorization to make a transaction (or a failure message) within a reasonable period of time (for example, 60 seconds), this may indicate a failure in communication, causing the client to transmit 435 the masked fingerprint a second time. If the masking is performed remotely, the client may not perform steps 425, 430 or 435.

At 440, the client may receive a request for payment information. Payment information may include, but is not limited to, e.g., credit card information, accounting information, as well as user data such as, e.g., user name, address, phone number. Optionally, the user may input all the necessary user data to the client, or the client may retrieve such information from local or remote memory.

At 445, the client transmits the relevant requested payment information. Optionally, before transmitting payment information, the client may encrypt the data using any suitable encryption technique.

At 450, the client receives authorization to make a transaction. The authorization may include a password or other security information that is to be used to make particular transactions.

At 455, the client may request to make a specific transaction. Optionally, this may include the use of a password or other security information.

Once the transaction is complete, the client optionally may receive confirmation that the transaction is complete. Optionally, the client may exit the application, and may terminate any network connections.

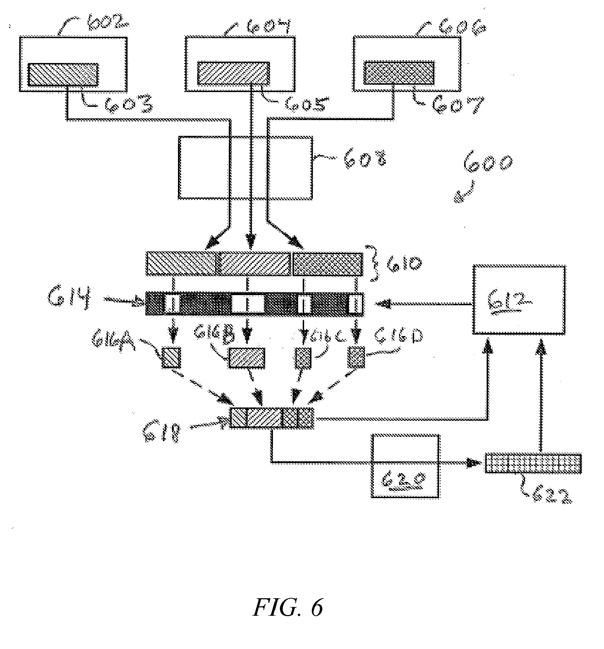

Pattern masking the gross fingerprint data to provide a fingerprint for transmission may provide an important feature for enhancing security of transmissions between a client and a server. FIG. 6 illustrates pattern masking 600 in the present context, using a conceptual diagram. Items 602, 604 and 606 represent components or modules of a client device that include non-user-configurable data 603, 605 and 607 concerning a stable state or configuration of client hardware or firmware. A client-side process, such as one integral to the target executable, reads the data items and compiles the data in some prearranged order to form a gross fingerprint data record 610, including the data items 603, 605 and 607 stored in defined data fields. Although only three components and data items are illustrated, in most applications many more components and data items can and should be used to compile the gross fingerprint data.

A remote process 612, such as a process operating on a server, provides a pattern mask 614 to the client device. The pattern mask specifies defined portions 616A, 616B, 616C, and/or 616D of a data record that are to be used to compile a second fingerprint to be transmitted from the client device. Four data portions are illustrated by way of example only; any desired number of portions may be used and the portions may be selected with some overlap (no overlap is shown). In total, the data portions should identify substantially less than all of the data in gross fingerprint 610 for inclusion in the to-be-transmitted fingerprint, for example, less than 90%, or between 1% and 90%. Percentages outside ofthis range may also be used, but using too low of a percentage may be relatively inefficient, while using too high of a percentage may be relatively less secure. The pattern mask may also indicate an order with which the defined portions 616A, 616B, 616C, and/or 616D should be compiled to create the second fingerprint to be transmitted, or any other desired reversible data transformation.

A client-side process such as the target executable may then extract the defined data portions 616A, 616B, 616C, and/or 616D and compile them to provide a machine fingerprint 618. Optionally, the client device may delete the gross fingerprint 610 after the machine fingerprint 618 is defined. Although FIG. 6 shows the machine fingerprint as including data in delimited fields, this is merely for illustrative purposes. Generally, the client device should prepare the machine fingerprint as an unbroken field or data stream made up of the component items 616A, 616B, 616C, and/or 616D, formatted such that it is difficult or impossible for a third party not in possession of the pattern mask template 614 to determine where one data item ends and the next begins.

The client device may transmit the machine fingerprint 618 to the remote process 612 in an unencrypted form. In the alternative, a client-side encryption process 620 may encrypt the machine fingerprint 618 using any suitable encryption process to provide an encrypted fingerprint 622. The client device may transmit the encrypted fingerprint to the server.

Characteristically, therefore, the machine fingerprint 618 and template 614 cannot be used to reconstruct the gross fingerprint 610. In some embodiments, the gross fingerprint can be determined only by operating the described process at the client device on which the target executable is installed, is not stored, and is deleted from temporary memory after use. In other embodiments, the gross fingerprint may be securely transmitted to a trusted server and/or stored locally.

The machine fingerprint 618 may be used in a reverse authentication process used to authenticate the server to the client device. In this process, the server transmits a reverse key to the client device that is made up of data from the machine key 618, or the gross fingerprint 610 if shared with the server. In some embodiments, the reverse key is made up of the data items 616A, 616B, 616C, and/or 616D transformed or reordered according to a predefined template or plan that is programmed into the target executable on the client device. The client device may thereby determine whether or not the reverse key from the server is consistent with the gross fingerprint data 610 and the original masking template 614. For example, the client device may regenerate or retrieve from memory the machine key 618 generated using the template 614 and compare it to a machine key generated by applying a predetermined transformation to the reverse key from the server. If the keys match, the client device may deem the server authenticated and conversely if the keys do not match deem the server not authenticated. In the alternative, or in addition, the server may generate a second machine fingerprint using a new masking template and a gross fingerprint stored in memory. The server then transmits the second machine fingerprint and new masking template to the client device. In response, the client device may compare the second machine fingerprint to a newly-generated fingerprint generated at the client using the new masking template and the gross fingerprint data. If the fingerprints match, the client device may deem the server authenticated, and conversely, if the fingerprints do not match the client may deem the server not authenticated.

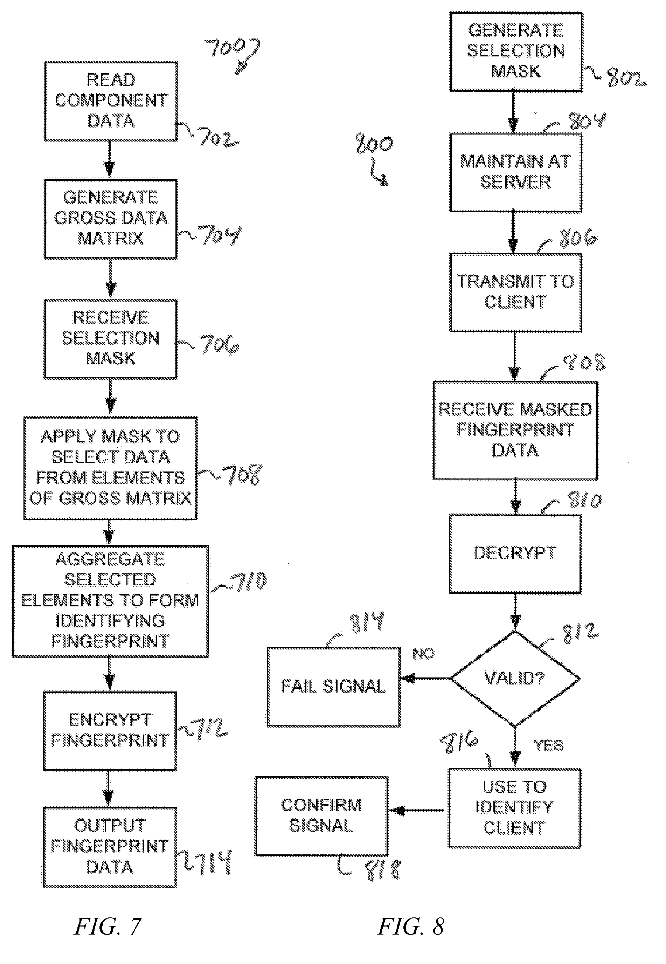

In accordance with the foregoing, FIG. 7 shows a method 700 that may be performed on a client device to generate a machine fingerprint to be transmitted to another device or process. Method 700 may be used in the processes discussed above to generate a machine fingerprint. At 702, the client may read the component data as discussed above. At 704, the client generates a gross fingerprint or data matrix comprising the component data in defined fields. At 706, the client may receive a defined selection mask or template from another device or process. At 708, the client may apply the received template to select data elements from the data matrix as discussed above. At 710, the client may aggregate the selected data elements to form fingerprint data capable of indentifying the client by stable elements of its hardware/firmware configuration. At 712, the client may encrypt the fingerprint for secure transmission. At 714, the client may output the fingerprint for use by another device or process to identify or authenticate the client device.

Also in accordance with the foregoing, FIG. 8 shows a method 800 that may be performed by a server or process to use a selection mask or template to authenticate or identify another device or process. At 802, the server may generate a selection mask with reference to a predefined data element or matrix. The predefined data element does not define the data itself, and instead defines a data structure in which the data will appear, for example, a structure of a database record. The selection mask should be generated to have the characteristics described above in the specification. The server may maintain the selection mask 804 in a database or memory accessible to the server for any desired length of time.

In response to any desired trigger, for example, a client request, the server may transmit the selection mask 806 to the target client. The target client is the client device to be identified or authenticated. After transmission, server may wait for the client to process the selection mask and then receive a data item 808 from the client identified as being the fingerprint data generated using the transmitted mask. If necessary, the server may decrypt 810 the fingerprint data received from the client.

At 812, the server may determine whether or not the fingerprint data is valid. Validity may be determined by the server based on comparison to a benchmark. In an identification process, the server may determine the fingerprint is valid if it conforms to an anticipated data structure, for example, if it is made up of the expected amount and form of data. In an authentication process, the server may determine the fingerprint is valid if it matches or is consistent with an earlier fingerprint received from the same client (or from a client purporting to be the same client). If the server does not determine that the fingerprint is valid, it may perform any desired failure routine, for example generating a failure signal 814. If the fingerprint is valid, it may be saved as an identifier of the client 816. In the alternative, or in addition, the server may use it to authenticate that a client is the same as one previously identified. At 818, the server may provide a confirmation signal confirming a successful authentication or identification of the client device.

It is noted that one or more of the techniques and methodologies described herein may be performed by embedded applications, platforms, or systems. For example, the techniques implemented by the static network device described herein may alternatively, or additionally, be performed by applications or components that are embedded in a portable devices, such as, for example, mobile phones, digital watches, personal or digital assistants (PDAs). It is further noted that the methods described herein may be performed by a general-purpose computer system and/or an embedded application or component of a special-purpose system.

In one embodiment, the special-purpose device comprises an embedded platform running an embedded Linux operating system (OS) or the like. For example, the unique device identifier or fingerprint for the special-purpose device may be created by collecting and using one or more of the following information: machine model; processor model; processor details; processor speed; memory model; memory total; network model of each Ethernet interface; network MAC address of each Ethernet interface; BlackBox model (e.g., any Flash device); BlackBox serial (e.g., using Dallas Silicone Serial DS-2401 chipset or the like); OS install date; nonce value; nonce time of day; and any other predefined hardware information stored (optionally encrypted) in EEPROM; any variations/combinations thereof.

While the present invention has been illustrated and described with particularity in terms of preferred embodiments, it should be understood that no limitation of the scope of the invention is intended thereby. Features of any of the foregoing methods and devices may be substituted or added into the others, as will be apparent to those of skill in the art. It should also be understood that variations of the particular embodiments described herein incorporating the principles of the present invention will occur to those of ordinary skill in the art and yet be within the scope of the invention.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A method, at one or more servers, for selectively authorizing a transaction, comprising:
receiving a request to authorize the transaction;
receiving machine fingerprint data related to the request to authorize the transaction;
saving the machine fingerprint data in a memory;
receiving associated payment information related to the request to authorize the transaction;
saving the payment information in a memory;
retrieving previously stored machine fingerprint data associated with the payment information;
comparing the received machine fingerprint data with previously stored machine fingerprint data associated with the payment information;
determining, using the machine fingerprint data, whether to authorize the transaction.

2. The method of claim 1, further comprising decrypting machine fingerprint data related to the request to authorize the transaction.

3. The method of claim 2, wherein decrypting comprises using an asymmetrical public-private encryption method using a private key for encryption and a public key for decryption.

4. The method of claim 1, wherein determining whether to authorize the transaction comprises authorizing the transaction if the received machine fingerprint data sufficiently matches previously stored machine fingerprint data associated with the payment information.

5. The method of claim 1, wherein determining whether to authorize the transaction comprises not authorizing the transaction if the received machine fingerprint data insufficiently matches previously stored machine fingerprint data associated with the payment information.

6. The method of claim 1, wherein determining whether to authorize the transaction comprises not authorizing the transaction if the received machine fingerprint data has not previously been stored.

7. The method of claim 1, wherein the steps are performed by one server.

8. A method, at a client device, comprising:
generating machine fingerprint data by reading configuration data indicating non-user-configurable settings for different hardware components of the client device, and aggregating the configuration data to create a defined data series;
transmitting to a server the machine fingerprint data and a request to authorize a transaction;
receiving authorization for the transaction; and
in response to receiving the authorization, requesting to execute a specific transaction.

9. The method of claim 8, further comprising receiving selection criteria from the server, and wherein generating machine fingerprint data further comprises selecting data from the defined data series according to the selection criteria to generate the machine fingerprint data.

10. The method of claim 8, further comprising encrypting the machine fingerprint data.

11. The method of claim 8, further comprising storing the machine fingerprint data in a buffer of the client device before transmitting the machine fingerprint data to the server, and deleting the machine fingerprint data from the client device after transmitting the machine fingerprint data to the server.
